# EUROPEAN PATENT APPLICATION

(11) **EP 4 660 230 A1**
(43) Date of publication of application: **10.12.2025**
(21) Application number: 24179601.0
(22) Date of filing: 03.06.2024
(51) Int. Cl.: C08J 11/26

(54) **METHOD FOR CHEMICALLY RECYCLING POLYAMIDE POLYMERS USING ALIPHATIC DICARBOXYLIC ACIDS AND RELATED METHODS**

(71) Applicant: VITO NV, 2400 Mol (BE); Universidad del Pais Vasco - Euskal Herriko Unibertsitatea (UPV/EHU), 48940 Leioa (ES)
(72) Inventor: MESTRE MEMBRADO, Marta, 48940 Leioa (ES); SARDON, Haritz, 48940 Leioa (ES); ELST, Kathy, 2400 Mol (BE); OLAZABAL, Ion, 48940 Leioa (ES); VANBROEKHOVEN, Karolien, 2400 Mol (BE)
(74) Representative: Arnold & Siedsma

(57) **Abstract**

The method involves chemically recycling polyamide (PA) polymers by mixing them with a molar excess of an aliphatic dicarboxylic acid and heating the mixture to at least the melting temperature of the polymers for a minimum of 2 hours. This results in a solution comprising depolymerization products of the polymers. The solution can optionally be treated to recover these products. The aliphatic dicarboxylic acids can be of a specific formula, and the method can be carried out under atmospheric pressure. The mixture can be heated to a temperature between 100°C and 200°C for about 2 to 4 hours. The PA polymer can be an amorphous or semi-crystalline polyamide, and the aliphatic dicarboxylic acid can be selected from a specific group. The depolymerization products can be Aminocaproic acid derivatives, which can be used in the synthesis of resins for coatings or as plasticizers in PVC and nylon resins.

## Description

### TECHNICAL FIELD

The invention pertains to a method for chemically recycling polyamide polymers with the use of commercially accessible aliphatic dicarboxylic acids.

### BACKGROUND

Polyamides, such as Polyamide 6 (PA6), are a class of polymers that are widely used in various industries due to their excellent mechanical properties, chemical resistance, and thermal stability. However, the disposal of polyamide waste poses a significant environmental challenge. Traditional methods of recycling polyamides often involve mechanical recycling, which can degrade the quality of the material, or incineration, which can release harmful gases into the atmosphere. Furthermore, the use of harsh conditions in these processes can lead to additional environmental and economic concerns. Therefore, there is a growing interest in developing more sustainable and efficient methods for recycling polyamides. One such approach is chemical recycling, which involves breaking down the polymer into its constituent monomers or other useful chemicals. However, the development of effective and sustainable chemical recycling methods for polyamides remains a challenge.

### SUMMARY

In accordance with embodiments, a method is provided for chemically recycling polyamide (PA) polymers. The method involves mixing the polyamide polymers with (a molar excess of) an aliphatic dicarboxylic acid and heating the mixture to a temperature of at least 60°C, in particular up to the melting temperature of the polyamide polymers for at least 15 minutes (30 minutes, 1 hour, 2 hours, 3 hours); in particular up to about 4 hours. This results in a solution comprising depolymerization products of the polyamide polymers. The solution can optionally be treated to recover the depolymerization products.

### LIST OF FIGURES

Figure 1. illustrates, in a flowchart, operations for depolymerizing polyamide polymers in accordance with certain embodiments.
Figure 2. Mn analysis over time of the PA6 recovered from the depolymerization with glutaric acid at 150°C. Data obtained from GPC measurements.

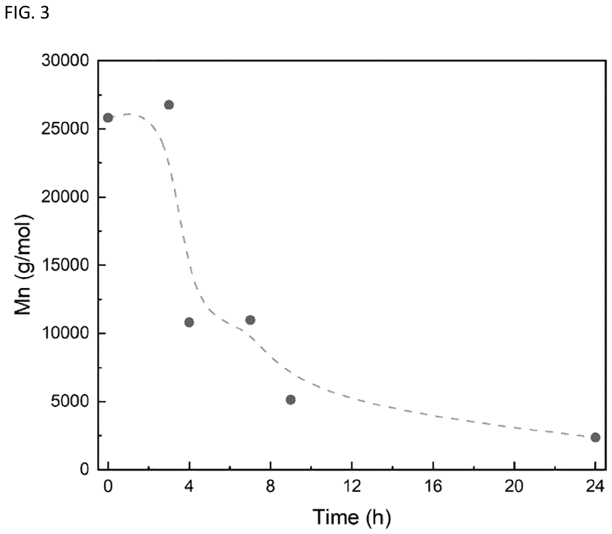

Figure 3. Mn analysis over time of the PA6 recovered from the depolymerization with glutaric acid at 150°C. Data obtained from GPC measurements.

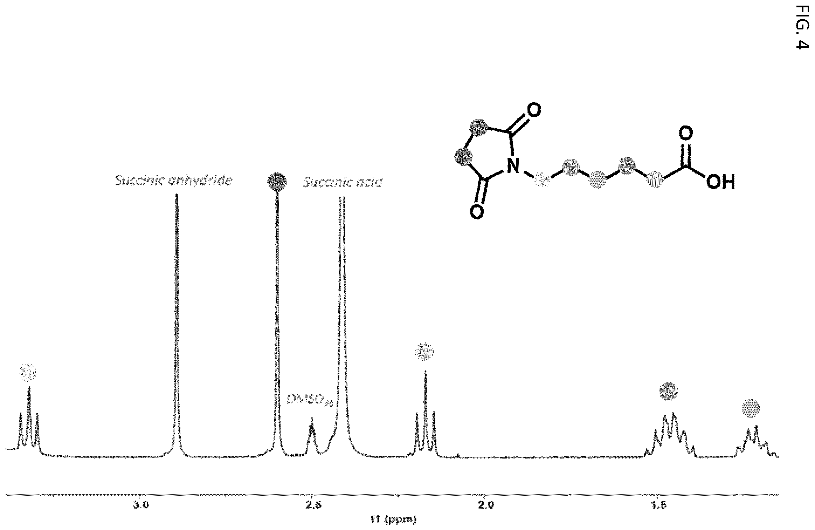

Figure 4. 1H-NMR of the reaction product obtained of the depolymerization of PA6 with succinic acid at 250 °C (Example 4).

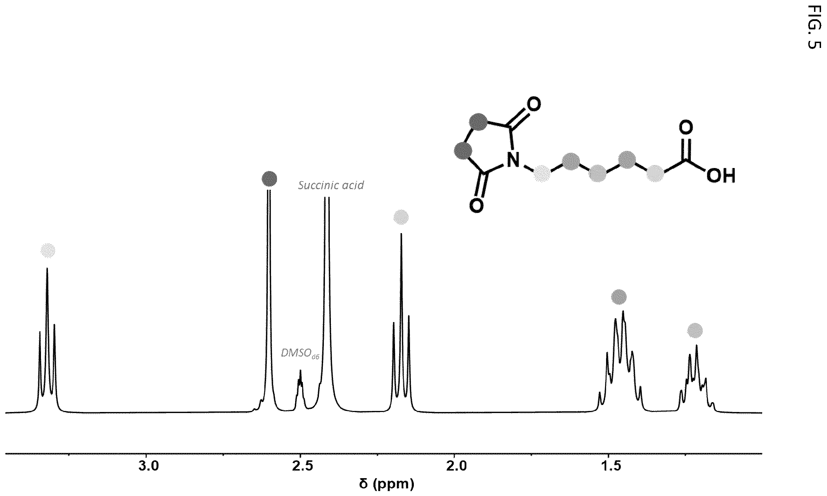

Figure 5. 1H-NMR of the reaction product obtained of the depolymerization of PA6 with succinic acid at 200 °C (Example 5).
Figure 6. 1H-NMR of the reaction product obtained of the depolymerization of PA6 with adipic acid at 250 °C (Example 6).

### DETAILED DESCRIPTION

Step 100 involves the process of mixing polyamide polymers with an aliphatic dicarboxylic acid; in particular with a molar excess of an aliphatic dicarboxylic acid. The mixture is for example prepared by combining 1 mol equivalent of polyamide polymers with about 3 mol equivalents of the acid, as detailed in sub-step 100-b. This ratio is selected to drive the reaction towards the desired outcome, ensuring that there is sufficient acid to interact with all of the polymer material.

The aliphatic dicarboxylic acids used in this process are characterized by the general structure of formula HOOC-(CH2)n-COOH (I), where n represents the number of carbon atoms in the aliphatic chain, ranging from 0 to 16, with a focus on the range from 1 to 8, as described in sub-step 100-a. The length of the carbon chain, denoted by n, affects the properties of the acid, including its reactivity.

Sub-step 100-c specifies that the polyamide polymers can be either amorphous or semi-crystalline. The physical structure of the polymer, whether it lacks a defined crystalline structure or contains both amorphous and crystalline regions, influences the interaction with the acid.

A variety of polyamide types are suitable for the process, including polyphthalamide and other specific types such as polyamide 6, polyamide 6.6, polyamide 6.9, among others, as listed in sub-step 100-d. Each type has a distinct structure that can affect the outcome of the process. In particular the polyamides are aliphatic polyamides. More in particular aliphatic polyamides represented by formula (Ila) or (IIb) 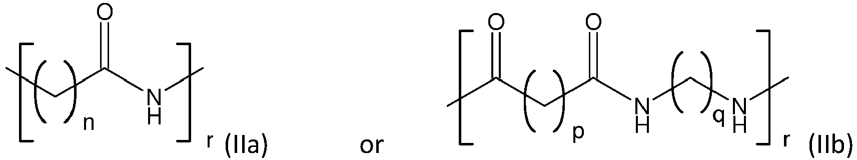 Wherein;
- r is at least 2;
- n is an integer from 4 to 12; in particular from 4 to 6;
- p is an integer from 4 to 12; in particular from 4 to 10; more in particular from 4 to 6;
- q is an integer from 4 to 12; in particular from 4 to 10; more in particular from 4 to 6.

Sub-step 100-e identifies oxalic acid, glutaric acid, adipic acid, succinic acid, and their mixtures as the acids that can be used for the process. These are selected based on their properties and their ability to facilitate the breakdown of the polyamide polymers.

In summary, step 100 and its sub-steps outline the preparation of a mixture of polyamide polymers and aliphatic dicarboxylic acids in specific ratios and structures. The selection of the acid, its structural formula, the molar ratio, and the type of polyamide polymers are parameters that facilitate the process. This preparation is essential for the subsequent breakdown of the polymers into monomeric units, which can then be utilized in further processing or applications.

Step 102 involves heating a mixture that contains polyamide polymers and aliphatic dicarboxylic acids. This process is conducted by placing the mixture in a reaction vessel and applying heat to increase the temperature up to the melting point of the polyamide polymers. The temperature is maintained at a temperature of at least 60°C, 80°C, and preferably within a range of 100°C to 200°C (Step 102-b), which is suitable for the depolymerization reaction to occur.

The duration of heating is set to be at least 15 min, with up to approximately 2 to 4 hours (Step 102-c), which allows for the necessary interaction between the polyamide and the dicarboxylic acid to achieve a high yield of depolymerization. The process is carried out under atmospheric pressure (Step 102-a), eliminating the need for specialized pressurized equipment, which simplifies the setup and potentially reduces costs.

The substances involved in this step are the polyamide polymers, which undergo the reaction, and the aliphatic dicarboxylic acids, which serve as the depolymerizing agents. The heating process is conducted to transform the polyamide into Amino-acid derivatives of formula (III) or (IV) below, which can be used in various applications such as the synthesis of resins or as additives in PVC and nylon resins.

The objective of this step is to depolymerize the polyamide polymers into monomers or oligomers that can be further processed or used in the production of new materials.

The depolymerization products obtained using the mild conditions of the present invention consist of amino-acid derivatives of formula 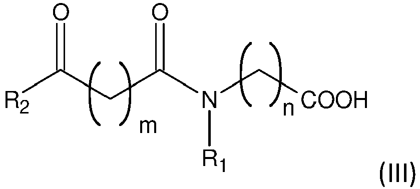 or 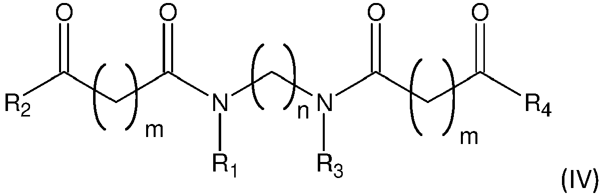 wherein;
n is an integer from 4 to 12; in particular from 4 to 6;
m is an integer from 0 to 16; in particular from 1 to 8; and
R₁ and R₃ are hydrogen and R₂ and R₄ are -OH, or wherein R₁ respectively R₃ forms together with R₂ respectively R₄ a direct bound between the N-atom and the C-atom to which said R₁ respectively R₃ and R₂ respectively R₄ are connected.

In an embodiment the depolymerization products consist of amino-acid derivatives of formula (IIIa) or (IIIb). formula 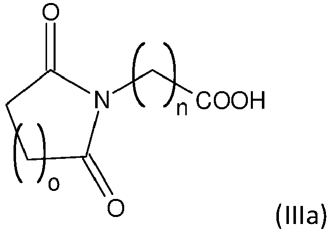 wherein;
n is an integer from 4 to 12; in particular from 4 to 6;
o is an integer from 1 to 2.
   or formula 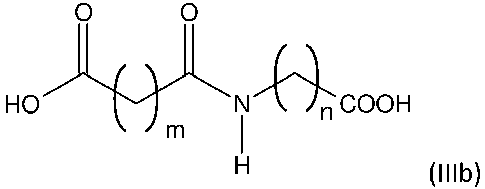 wherein;
   n is an integer from 4 to 12; in particular from 4 to 6;
   m is an integer from 4 to 16; in particular from 4 to 8.

In an embodiment the depolymerization products consist of amino-acid derivatives of formula (IVa) or (IVb). formula 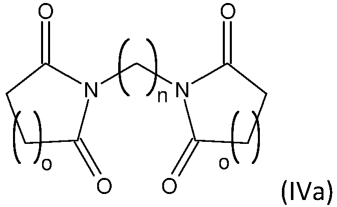 wherein;
n is an integer from 4 to 12; in particular from 4 to 6;
o is an integer from 1 to 2. or formula 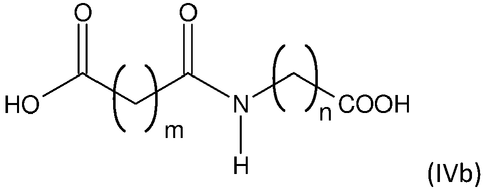 wherein;
   n is an integer from 4 to 12; in particular from 4 to 6;
   m is an integer from 4 to 16; in particular from 4 to 8.

Step 104 involves an optional treatment process to recover depolymerization products from a solution. This step is focused on separating and purifying the amino-acid derivatives as herein provided, from the mixture that results from the depolymerization of the polyamides, such as polyamide 6. The treatment process may include methods such as precipitation, filtration, or distillation, which are designed to isolate the desired chemical compounds from any remaining polyamide, excess dicarboxylic acid, and byproducts.

Sub-step 104-a identifies the specific chemical composition of the solution, confirming the presence of the depolymerization products. Techniques such as chromatography or spectroscopy are typically used to analyze the solution and verify the derivatives.

Sub-step 104-b introduces the possibility of further processing through hydrolysis. This step can involve the addition of specific chemicals to the solution to break down the depolymerization products into smaller molecules. The method of hydrolysis can be selected based on the desired end product and its intended use.

Sub-step 104-c details the hydrolysis process, which can be conducted in an aqueous medium and may be either acidic or basic, involving the addition of an acid or a base to achieve a controlled pH environment. Alternatively, enzymatic hydrolysis may be employed, utilizing enzymes to catalyze the reaction under milder conditions.
Further additional details relating to optional hydrolysis are provided below.

### Hydrolysis in acidic conditions.

The acidic hydrolysis is performed at a pH lower than 6.0, preferably lower than 4.0. The acid (Ac) to be used for the acidic hydrolysis is preferably a strong acid with a pKa lower than 2.0. The acid (Ac) may be selected in the group consisting of HCl, H2SO4 or a combination of two or more of said acids. The acid (Ac) is preferably HCl. The hydrolysis in acidic conditions is advantageously performed with the following initial proportions in the aqueous medium: - proportion of depolymerization products: at least 15.0 wt.%; - proportion of water: between 20.0 and 70.0 wt.%; - the remainder as acid (Ac) with the condition that the proportion of acid (Ac) is at least 2.0 wt.%, preferably at least 2.5 wt.%. These proportions are expressed in wt.% in the liquid medium.

### Hydrolysis in basic conditions.'

The basic hydrolysis is performed at a pH higher than 8.0, preferably higher than 9.0. The base (Ba) to be used for the basic hydrolysis is preferably a strong base with a pKa higher than 8.0. The base (Ba) may be selected in the group consisting of NaOH, KOH or a combination of two or more of said bases. The base (Ba) is preferably NaOH.

The hydrolysis may be performed at a temperature which is between 20°C and 190°C or between 20°C and 150°C. This temperature is preferably between 100°C and 150°C.

Sub-steps 104-d and 104-e discuss the applications of the amino-acid derivatives of formula (II), and in particular of formula (IIIa). In 104-d, these derivatives are incorporated into polymeric resin structures, which are then used in the synthesis of coatings. In 104-e, the derivatives are mixed with PVC and nylon resins to act as plasticizers, modifying the properties of these materials to enhance flexibility and durability.

Overall, Step 104 and its sub-steps describe the processes involved in the treatment of the depolymerization solution to obtain the depolymerization products, which are then used in various industrial applications, contributing to the sustainability and economic feasibility of the polyamide recycling process.

### Examples

### General Reagent and Reaction Information

Polyamide 6 pellets were purchased from LANXESS Corporation (Durethan B30S). All reagents and solvents were used without any further treatment (Sigma-Aldrich, TCI, Fisher Scientific and BLDpharm). Water was distilled and deionized. Polyamide 66 pellets were purchased from DuPont (Zytel 101L NC010). Elastane was purchased from *(*Phan, K.; Ügdüler, S.; Harinck, L.; Denolf, R.; Roosen, M.; O'Rourke, G.; De Vos, D.; Van Speybroeck, V.; De Clerck, K.; De Meester, S. Analysing the Potential of the Selective Dissolution of Elastane from Mixed Fiber Textile Waste. Resources, Conservation and Recycling 2023, 191, 106903*).* PET pellets were purchased from NOVAPET (Novapet CR)..

### General Analytical Information

The 1H NMR spectra of the solution were performed on a Bruker Avance DPX spectrometer at 300 MHz, in DMSO-d6, using CHCl3 as internal standard.

Molecular weights were analyzed by gel permeation chromatography (GPC) on an Agilent apparatus using a refractive index detector. The measurements were conducted using THF as eluent at 25°C and at a flow rate of 0.75 mL/min. The results are reported relative to a calibration by polystyrene (PS) standards.

### General Procedure for the depolymerization of polyamide 6

The depolymerization is carried out under atmospheric pressure at a temperature from 100 to 200 °C for 3 hours. The PA6 pellets and the dicarboxylic acids (and the co-solvent if needed) are added to a vial with a magnetic stirrer and placed on a hot plate. After 3 hours, the solution is cool down and water is added in order to precipitate unreacted PA and the excess of acid. Then, the solution is filtered.

Insoluble solid is washed with THF and dried under vacuum (40 °C) overnight. The Mw decrease is determined by GPC. PA6 was functionalized in order to improve its solubility.

The water from soluble fraction is removed under vacuum. Acetone is added to isolate the recovered product. The solution is filtered and the soluble part dried under vacuum.

### Example 1 - Depolymerization with glutaric acid of 150 °C.

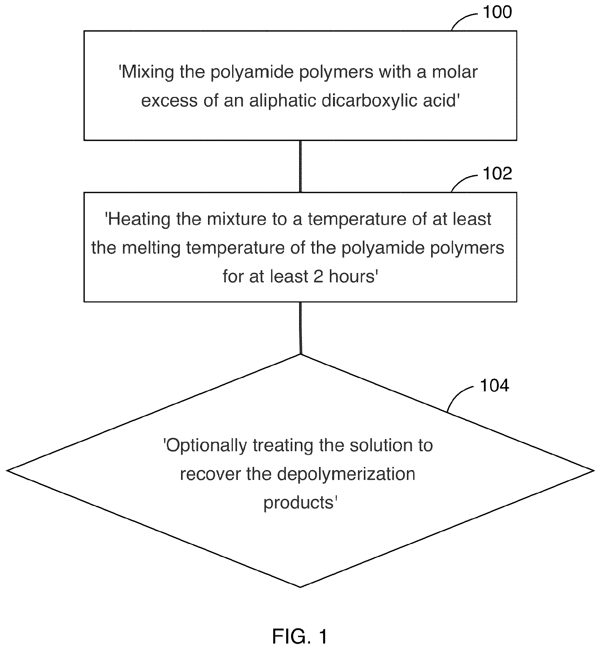

The PA6 pellets (0.5 g, 4.4 mmol, 1 eq), glutaric acid (1.8 g, 13 mmol, 3 eq) are added to a vial heated on a hot plate. The reaction is carried out under stirring and atmospheric pressure at 150 °C. After, 2 hours a colourless solution of PA6 was obtained. Samples are taken at different times, PA6 is recovered and functionalized. GCP is run to check the Mw decrease over the time (Figure 1). Mainly oligomers are recovered from the crude of the reaction.

### Example 2 - Solvent-assisted depolymerization with glutaric acid of 150 °C.

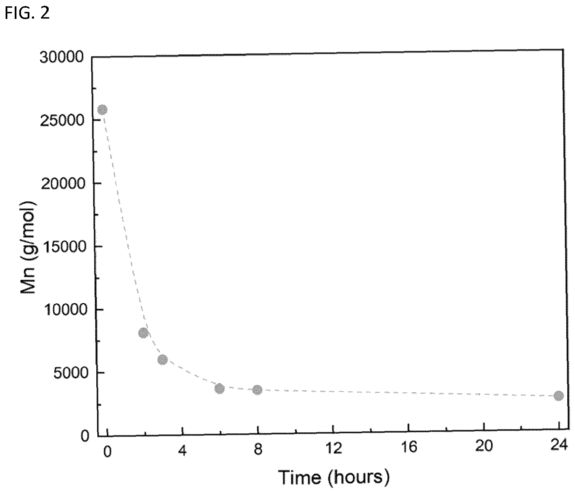

The PA6 pellets (0.5 g, 4.4 mmol, 1 eq), glutaric acid (1.8 g, 13 mmol, 3 eq) and DMSO (3 mL) are added to a vial heated on a hot plate. The reaction is carried out under stirring and atmospheric pressure at 150 °C. After 1 hour, PA6 were completely dissolved. Samples are taken at different times, PA6 is recovered and functionalized. GCP is run to check the Mw decrease over the time (Figure 2). Results show that at short time, PA6 is dissolved in the system as there is not decrease in the Mn. After 3 hours it is observed that the Mn decreases as a result of the depolymerization.

### Example 3 - Depolymerization with glutaric acid of 200 °C.

The PA6 pellets (0.5 g, 4.4 mmol, 1 eq), glutaric acid (1.8 g, 13 mmol, 3 eq) are added to a vial heated on a hot plate. The reaction is carried out under stirring and atmospheric pressure at 200 °C. After 3 hours the reaction was stoped and cooled down. 1H-NMR spectroscopy confirmed that only a small pure molecule was obtained from the reaction.

1H NMR (300 MHz, DMSOd6) δ 3.58 (t, 2H), 2.57 (t, 4H), 2.17 (t, 2H), 1.79 (p, 2H), 1.55 - 1.30 (m, 4H), 1.28 - 1.12 (m, 2H).

### Example 4 - Depolymerization with succinic acid of 250 °C.

The PA6 pellets (0.5 g, 4.4 mmol, 1 eq), succinic acid (2.0 g, 17.0 mmol, 3 eq ) are added to a vial heated on a hot plate. The reaction is carried out under stirring and atmospheric pressure at 250 °C. After 3 hours the reaction was stopped and cooled down. After the addition of the water, only the excess of succinic acid precipitated, which means that PA6 is converted in water-soluble products 1H-NMR spectroscopy confirmed that only a small pure molecule was obtained from the reaction according to the following reaction scheme 1.

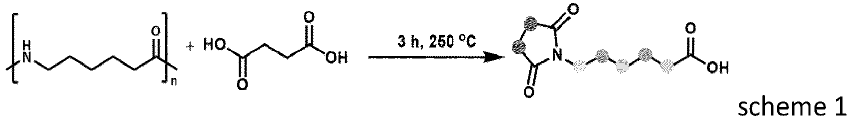

### Example 5 - Depolymerization with succinic acid of 200 °C.

The PA6 pellets (0.5 g, 4.4 mmol, 1 eq), succinic acid (2.0 g, 17.0 mmol, 3 eq ) are added to a vial heated on a hot plate. The reaction is carried out under stirring and atmospheric pressure at 200 °C. After 3 hours the reaction was stoped and cooled down. 1H-NMR spectroscopy confirmed that only a small pure molecule was obtained from the reaction according to scheme 1 above.

### Example 6 - Depolymerization with succinic acid of 200 °C.

The PA6 pellets (0.5 g, 4.4 mmol, 1 eq), succinic acid (2.0 g, 17.0 mmol, 3 eq ) are added to a vial heated on a hot plate. The reaction is carried out under stirring and atmospheric pressure at 200 °C. After 3 hours the reaction was stopped and cooled down. 1H-NMR spectroscopy confirmed that only a small pure molecule was obtained from the reaction according to scheme 1 above.

### Example 7 - Depolymerization with adipic acid of 250 °C.

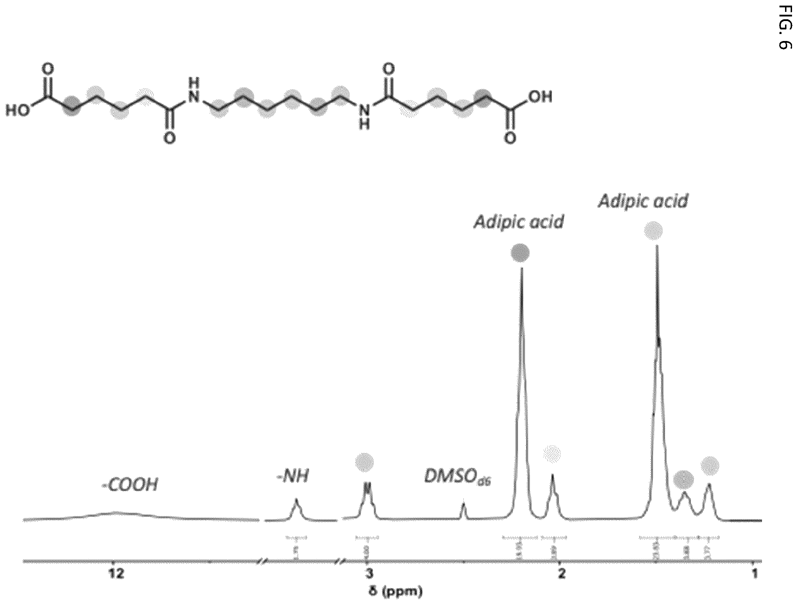

The PA6 pellets (0.5 g, 4.4 mmol, 1 eq), adipic acid (2.0 g, 17.0 mmol, 3 eq ) are added to a vial heated on a hot plate. The reaction is carried out under stirring and atmospheric pressure at 200 °C. After 3 hours the reaction was stopped and cooled down. 1H-NMR spectroscopy (Figure 6) confirmed that only a small pure molecule was obtained from the reaction.

### Example 8 - Selective dissolution of polyamides.

Selective dissolution of polyamides has been tested on a mixture of polyamide pellets (PA6 pellets (0.5 g, 4.4 mmol, 1 eq), PA66 pellets (0.5 g, 3.8 mmol, 1eq ) and elastane pellets (0.5 g, 1eq )) with PET pellets (0.5 g, 15.1 mmol, 1 eq) using either glutaric acid (1.8 g, 13 mmol, 3 eq) or succinic acid (2.0 g, 17.0 mmol, 3 eq) as the dicarboxylic acid, in either water or DMSO. The depolymerization is carried out under atmospheric pressure at a temperature of 150 °C for at least 2 hours.

For the mixture of PA6 pellets with PET pellets, it has been observed that the PA6 pellets are dissolved upon incubation at 150°C for 2h, using either glutaric acid or succinic acid, both in water as in DMSO, and that under said conditions, whereas the PET pellets remain insoluble and could be recovered by hot filtration.

Similar observations were done for a mixture of PA66 pellets with PET pellets in DMSO, and for a mixture of elastane pellets with PET pellets in DMSO, using glutaric acid in both instances as the bicarboxylic acid. PA66 dissolved completely upon incubation at 150°C for 2h, and elastane partially dissolved within the 2h timeframe, but completely dissolved over time (i.e. within 24h).

These experiments demonstrate the selectivity of the aliphatic dicarboxylic acids in the depolymerization of polyamides.

### Example 9 - Dissolution Analysis for PA6 with glutaric acid.

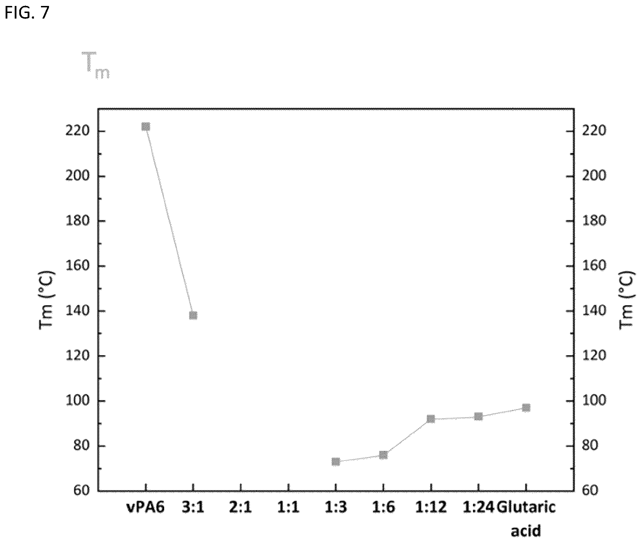

Using the depolymerisation conditions (150°C and 2h) of example 1 the effect of different amounts of glutaric acid on the Tm of the obtained reaction product has been determined (Figure 7) using differential scanning calorimetry with a heat flow rate of 20°C/min.

At a PA6:glutaric acid ratio of 1:3 the eutectic point (73°C) of the depolymerisation product with glutaric acid is reached. At higher amounts of glutaric acid the increase in Tm is likely due to the appearing crystallinity of the glutaric acid which is solid at room temperature. At the PA6:glutaric acid ratio's of 1:1 a Tm couldn't be determined and indicates an amorphous transition of the PA present.

## Claims

1. A method for chemically recycling polyamide (PA) polymers, comprising:
- mixing the polyamide polymers with (a molar excess of) an aliphatic dicarboxylic acid;
- heating said mixture to a temperature of at least 60°C for at least 15 minutes, thereby obtaining a solution comprising depolymerization products of the polyamide polymers; and
- optionally treating said solution to recover the depolymerization products.

2. The method of claim 1, wherein the aliphatic dicarboxylic acids are dicarboxylic acids of the formula HOOC-(CH₂)n-COOH (I), n being an integer between 0 and 16, in particular between 1 and 8 .

3. The method of claim 1, wherein the method is carried out under atmospheric pressure.

4. The method of claim 1, wherein the mixture is heated to a temperature in a range from about 100°C to about 250°C.

5. The method of claim 1, wherein the mixture is heated for at least 30 minutes, in particular for at least 1 hour; more in particular for about 2 to 4 hours.

6. The method of claim 1, wherein 1 mol equivalent of the polyamide polymers is mixed with about 3 mol equivalents of the aliphatic dicarboxylic acid.

7. The method for claim 1, wherein the PA polymer is an amorphous or semi-crystalline polyamide.

8. The method of claim 1, wherein the PA polymer may be a polyphthalamide, particularly selected in the group consisting of polyamide 6, polyamide 6.6, polyamide 6.9, polyamide 6.10, polyamide 6.12, polyamide 10.10, polyamide 5.10, polyamides 5.6, polyamide 5.9, polyamide 4.6, polyamide 4.9, polyamide 4.10, polyamide 12.12, polyamide 10.12, polyamide XT where X is a C4-C12-diamine; polyamide MXD6, polyamide MXD6/PXD6, polyamide MXD6/MXDI, polyamide 6T/66, polyamide 6T/6I/66, polyamide 6T/6I and mixtures thereof (wherein: MXD designates a structural unit with MXDA (m-xylylenediamine) as the diamine; PXD designates a structural unit with PXDA (p-xylylenediamine) as the diamine; I designates a structural unit with isophthalic acid as the dialed; T designates a structural unit with terephthahalic acid as the diacid).

9. The method of claim 1 wherein the aliphatic dicarboxylic acid is selected in the group consisting of oxalic acid, glutaric acid, adipic acid, succinic acid and mixtures thereof.

10. The method of claim 1, wherein the depolymerization products are amino-acid derivatives of formula 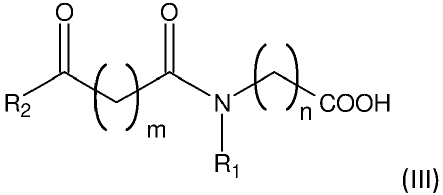 or 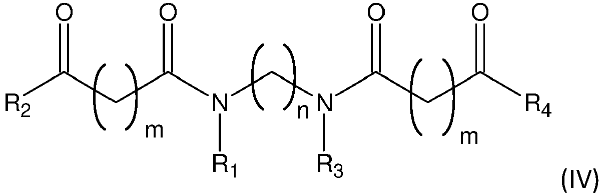 wherein;
n is an integer from 4 to 12; in particular from 4 to 6;
m is an integer from 0 to 16; in particular from 1 to 8; and
R₁ and R₃ are hydrogen and R₂ and R₄ are -OH, or wherein R₁ respectively R₃ forms together with R₂ respectively R₄ a direct bound between the N-atom and the C-atom to which said R₁ respectively R₃ and R₂ respectively R₄ are connected.

11. The method according to any one of the preceding claims, the method further comprising a hydrolysis of the obtained depolymerization products.

12. The method according the preceding claim wherein said hydrolysis is performed in an aqueous medium either (i) by an acidic or basic hydrolysis involving an acid (Ac) or a base (Ba) and performed at a pH respectively lower than 6.0 or higher than 8.0 or (ii) by an enzymatic hydrolysis.

13. The method of claim 9, wherein the amino-acid derivatives of formula (III) are used in the synthesis of resins for coatings.

14. The method of claim 9, wherein the amino-acid derivatives of formula (III) are used as plasticizers in PVC and nylon resins.
